Europäisches Patentamt

European Patent Office

Office européen des brevets

(19)

(11) Veröffentlichungsnummer : **0 178 487
B1**

(12)  # EUROPÄISCHE PATENTSCHRIFT

(45) Veröffentlichungstag der Patentschrift :
13.12.89

(21) Anmeldenummer : 85111940.4

(22) Anmeldetag : 20.09.85

(51) Int. Cl.⁴ : **F 02 M 41/14**, F 02 M 45/06

(54) Kraftstoffeinspritzvorrichtung für Brennkraftmaschinen.

(30) Priorität : 17.10.84 DE 3437933

(43) Veröffentlichungstag der Anmeldung :
23.04.86 Patentblatt 86/17

(45) Bekanntmachung des Hinweises auf die Patenterteilung : 13.12.89 Patentblatt 89/50

(84) Benannte Vertragsstaaten :
DE FR GB

(56) Entgegenhaltungen :
EP--A-- 0 114 991
DE--A-- 3 319 124
GB--A-- 2 128 266

(73) Patentinhaber : ROBERT BOSCH GMBH
Postfach 50
D-7000 Stuttgart 1 (DE)

(72) Erfinder : Babitzka, Rudolf
Birkenweg 11
D-7141 Kirchberg (DE)

EP 0 178 487 B1

## Beschreibung

### Stand der Technik

Die Erfindung geht von einer Kraftstoffeinspritzvorrichtung für Brennkraftmaschinen nach der Gattung des Hauptanspruchs aus. Bei einer durch die EP-A-0 114 991 bekannten Kraftstoffeinspritzvorrichtung dieser Art sind die beiden Pumpenarbeitsräume voneinander getrennt und werden jeder einzeln im Wechsel über eine Druckleitung und ein Steuerventil entweder beim Saughub mit der Kraftstoffdosiereinrichtung oder beim Förderhub mit dem Verteiler verbunden, wobei zugleich der andere Pumpenarbeitsraum über das Steuerventil und eine Druckleitung mit einem Entlastungsraum verbunden ist. Diese Einrichtung ist vor allem wegen des dort verwendeten Steuerventils sehr aufwendig.

### Vorteile der Erfindung

Die erfindungsgemäße Kraftstoffeinspritzvorrichtung mit den kennzeichnenden Merkmalen des Hauptanspruchs hat demgegenüber den Vorteil, daß sie wesentlich einfacher aufgebaut ist und bei Verwendung einer schnellschaltenden Dosiereinrichtung eine exakte, durch die Konstruktion der Winkelzuordnung festgelegte Kraftstoffvoreinspritzung und Kraftstoffhaupteinspritzung im vorgegebenen Winkelabstand erzielt werden kann. Durch die Nockengestaltung kann dabei die Förderrate der einzelnen Teileinspritzungen voneinander abweichend festgelegt und optimiert werden.

Durch die in den Unteransprüchen angegebenen Weiterbildungen des Gegenstands des Hauptanspruchs werden mit ihren Vorteilen in der nachfolgenden Beschreibung zusammen mit der Zeichnung näher dargestellt.

### Zeichnung

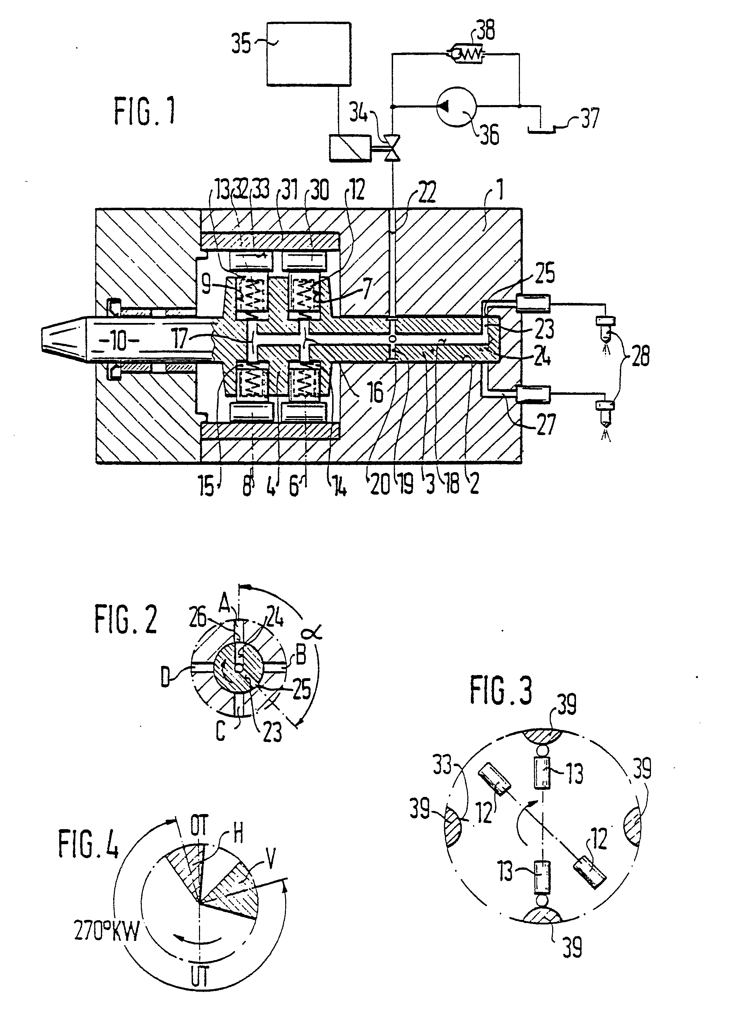

Ein Ausführungsbeispiel der Erfindung ist in der Zeichnung dargestellt. Es zeigen Figur 1 eine Radialkolben-Kraftstoffverteilereinspritzpumpe in vereinfachter Darstellung, Figur 2 einen Schnitt durch den Verteiler der Kraftstoffeinspritzpumpe nach Figur 1, Figur 3 die Pumpenkolbenlage der Pumpenkolbenpaare gemäß Kraftstoffeinspritzpumpe nach Figur 1 und Figur 4 ein Diagramm über die Spritzbereiche, die mit Hilfe der beschriebenen Kraftstoffeinspritzpumpe während eines Zyklusses der Brennkraftmaschine eingehalten werden können.

### Beschreibung des Ausführungsbeispiels

Bei der in Figur 1 gezeigten Radialkolben-Verteilereinspritzpumpe ist in einem Gehäuse 1 ein Verteilerzylinder 2 vorgesehen, in dem ein Verteiler 3 drehbar gelagert ist. Am aus dem Verteilerzylinder heraustretenden Ende 4 des Verteilers weist dieser eine Durchmessererweiterung auf, die in einer ersten radialen Ebene 6 zwei diametral gegenüberliegende, radial verlaufende, erste Pumpenzylinder 7 aufnimmt. In einer zweiten Radialebene 8 parallel zur ersten Radialebene 6 sind weiterhin zwei diametral gegenüberliegende, radial verlaufende, zweite Pumpenzylinder 9 in dem im Durchmesser erweiterten Ende 4 des Verteilers angeordnet.

Dieses Ende ist ferner mit einer Pumpenantriebswelle 10 gekoppelt oder kraftschlüssig verbunden.

In jedem der ersten Pumpenzylinder 7 sind erste Pumpenkolben 12 und in jedem der zweiten Pumpenzylinder 9 sind zweite Pumpenkolben 13 verschiebbar gelagert. Die Pumpenkolben schließen stirnseitig in den Pumpenzylindern erste Pumpenarbeitsräume 14 bzw. zweite Pumpenarbeitsräume 15 ein, die untereinander durch einen Querkanal 16 bzw. einen Querkanal 17 im Verteiler verbunden sind. Beide Querkanäle sind über eine axial im Verteiler verlaufende Druckleitung 18 ständig miteinander verbunden. Die Druckleitung 18 führt axial von dem zweiten Querkanal 17 zum ersten Querkanal 16 und weiter in den im Verteilerzylinder gelagerten Verteilerteil, wo sie als Sackbohrung endet. Von der Druckleitung 18 zweigen Radialkanäle 19 ab vorzugsweise entsprechend Zahl und Verteilung der Saughübe der Pumpenkolben pro Umdrehung des Verteilers. Sie münden in eine an der Mantelfläche des Verteilers angeordnete Ringnut 20, die mit einer in den Verteilerzylinder 2 einmündenden Kraftstoffversorgungsleitung 22 in Verbindung steht. Weiterhin zweigen von der Druckleitung 18 zwei um einen Winkel von $\alpha = 135°$ zueinander versetzte radiale Kanäle 23 und 24 ab, die in eine erste Verteileröffnung 25 und eine zweite Verteileröffnung 26 an der Mantelfläche des Verteilers münden. In der Radialebene, in der diese Verteileröffnungen liegen, führen von dem Verteilerzylinder Einspritzleitungen 27 ab, die entsprechend der Zahl und Verteilung der zu versorgenden Zylinder der zugehörigen Brennkraftmaschine am Umfang verteilt angeordnet sind. Die Einspritzleitungen führen aus dem Pumpengehäuse heraus zu symbolisch dargestellten Kraftstoffeinspritzventilen 28. Im gezeigten Beispiel versorgt die Kraftstoffeinspritzpumpe eine Vierzylinder-Viertakt-Reihenbrennkraftmaschine, so daß pro Umdrehung des Verteilers vier Einspritzleitung A bis D, die im 90°-Abstand voneinander angeordnet sind, mit Kraftstoff versorgt werden müssen. Dieser Zusammenhang ist der Darstellung in Figur 2 entnehmen.

Der Antrieb der Pumpenkolben erfolgt über Rollen 30, die von Rollenstößeln getragen werden und die auf einer oder zwei Nockenbahnen eines die Pumpenkolben radial umschließenden Nockenringes 31 ablaufen. Die Pumpenkolben und die Rollen 30 werden dabei durch Druckfedern 32 an der Nockenbahn 33 gehalten. Diese Druckfedern sind zwischen Pumpenkolben und der inneren Stirnseite der Pumpenzylinder eingespannt.

In der Kraftstoffversorgungsleitung 22 ist ein Ventil 34 angeordnet, mit dem die zur Einspritzung kommende Kraftstoffmenge gesteuert werden kann. Dieses Ventil wird dabei von einem Steuergerät 35 gesteuert, wobei es als elektromechanisches Ventil direkt angesteuert werden kann oder als Servoventil ausgebildet sein kann. Vorzugsweise kann es für schnelle und genaue Schaltvorgänge in der gleichen Weise ausgebildet sein, wie es durch den eingangs erwähnten Stand der Technik offenbart ist. Je nach Anforderung ist jedoch auch ein Piezoventil anderer Ausgestaltung oder ein Elektromagnetventil einsetzbar. Die Kraftstoffversorgungsleitung wird über eine Kraftstofförderpumpe 36 aus einem Kraftstoffvorratsbehälter 37 mit Kraftstoff versorgt, wobei der Versorgungsdruck mit Hilfe eines Drucksteuerventils 38 einstellbar ist.

Zum Verständnis der Darstellungen in Figur 1 ist noch auszuführen, daß die Pumpenkolben in der zweiten Radialebene um 45° versetzt gegenüber der tatsächlichen Lage gezeichnet sind. Die Lage der Pumpenkolben der ersten Radialebene und der zweiten Radialebene sind in der Darstellung von Figur 3 verdeutlicht. Diesem Bild ist zu entnehmen, daß die Betätigung der ersten Pumpenkolben 12 135° vor der Betätigung der zweiten Pumpenkolben 13 erfolgt. Dies entspricht der Lage der ersten Verteileröffnung 25, die der zweiten Verteileröffnung 26 135° vorauseilt, wie Figur 2 zu entnehmen ist. Dabei wird vorausgesetzt, daß die Breite der Nockenbahn 33 so ausgelegt ist, daß sie sich über die Rollen 30 der Pumpenkolben beider Radialebenen erstreckt.

Wird die Pumpenantriebswelle 10 in Drehung versetzt, werden die Rollen 30 über die Nockenbahn 33 geführt und die Pumpenkolben in eine hin- und hergehende Bewegung versetzt. Bei einer Auswärtsbewegung der Pumpenkolben wird die Kraftstoffversorgungsleitung 22 mit einem der Radialkanäle 19 in Verbindung gebracht, so daß entsprechend der Ansteuerung des Ventils 34 Kraftstoff in den Pumpenarbeitsraum 14 gelangen kann. Für eine Kraftstofförderung wird darauf der Pumpenkolben durch entsprechende Nockenerhebungen der Nockenbahn nach innen bewegt. Dabei ist die Verbindung zur Kraftstoffversorgungsleitung 22 oder zumindest die Öffnung der Kraftstoffversorgungsleitung 22 verschlossen, so daß der durch den ersten Pumpenkolben 12 verdrängte Kraftstoff über eine der Verteileröffnungen in eine der turnusmäßig angesteuerten Einspritzleitungen gefördert werden kann und unter Einspritzdruck an der Kraftstoffeinspritzdüse austreten kann. Beim sich anschließenden Saughub der ersten Pumpenkolben wird wieder Kraftstoff angesaugt und für eine nächste Förderung bereitgestellt.

Durch die Ausgestaltung der Einspritzpumpe sind nunmehr zwei Pumpenkolbenpaare in verschiedenen Radialebenen vorgesehen und zueinander versetzt, so daß insgesamt bei einer Kraftstoffeinspritzpumpe zur Versorgung von vier Zylindern acht Förderhübe pro Umdrehung ausgeübt werden können mit einer Nockenbahn, die für eine viermalige Förderung pro Umdrehung ausgelegt ist. Wenn man von der Darstellung in Figur 2 ausgeht, unter Annahme, daß die Kraftstoffförderung in die Einspritzleitung A durch die zweite Verteileröffnung 26 beendet ist, erfolgt nach einer Drehung von 45° Nockenwellenwinkel im Uhrzeigersinn über die erste Verteileröffnung 25 eine Kraftstoffvoreinspritzung in die Einspritzleitung C. Diese Kraftstoffmenge wird entsprechend der Darstellung von Figur 3 mit Hilfe der ersten Pumpenkolben 12 gefördert. Nach einer weiteren Drehung von 45° wird in die Kraftstoffeinspritzleitung B über die zweite Verteileröffnung 26 eine Haupteinspritzmenge gefördert, die von den zweiten Pumpenkolben 13 verdrängt wird. Nach wiederum 90° Drehwinkel gelangt die zweite Verteileröffnung 26 in Überdeckung mit der Einspritzleitung C, so daß dort mit Hilfe der zweiten Pumpenkolben 13 die Haupteinspritzung erfolgt, die nunmehr 135° nach der Voreinspritzung über die erste Verteileröffnung 25 liegt. Entsprechend werden auch alle anderen Einspritzleitungen mit Kraftstoff versorgt. In Figur 3 sind dabei zum leichteren Verständnis die Lage der Nocken 39 auf der Nockenbahn 33 in Zuordnung zu den Pumpenkolbenlagen dargestellt. In Figur 4 schließlich ist ein Zyklus eines Kolbens einer Brennkraftmaschine dargestellt mit einem Saugtakt und einem Kompressionstakt und man kann dieser Darstellung entnehmen, daß die Voreinspritzung V 270° Kurbelwellenwinkel vor der Haupteinspritzung H liegt, die Voreinspritzung somit beim Beginn des Saugtaktes erfolgt und die Haupteinspritzung kurz vor OT am Kompressionsende liegt.

Insbesondere bei einer Dieselbrennkraftmaschine dient diese Haupteinspritzung der Entflammung der Ladung im Brennraum der Brennkraftmaschine. Die Haupteinspritzung bestimmt somit den Entflammungszeitpunkt und muß in Zuordnung zum oberen Totpunkt des Pumpenkolbens zum verbrennungstechnisch richtigen Zeitpunkt erfolgen. Die Haupteinspritzmenge bei der erfindungsgemäßen Kraftstoffeinspritzpumpe muß dabei gerade so groß sein, daß die Zündung erfolgen kann, wobei die Voreinspritzmenge wiederum so bemessen sein muß, daß bis zum Zeitpunkt der Haupteinspritzung keine Selbstentzündung des komprimierten Kraftstoff-Luft-Gemisches erfolgen kann. Unter Beachtung dieser Randbedingungen kann eine wesentliche Kraftstoffeinspritzmenge während der Saugphase bereits und während der anschließenden Kompressionsphase gut mit der Luftfüllung der Brennräume vermischt werden und somit für eine gute Verbrennung aufbereitet werden. Gleiche Aspekte sind auch bei einer fremdgezündeten Brennkraftmaschine anwendbar, die mit Direkteinspritzung in den Brennraum arbeitet unter Vermeidung der insbesondere im Teillastbetrieb nachteiligen Saugdrosselregelung von Gemischansaugmengen. Bei solchen Brennkraftmaschinen liegen die Verhältnisse ähnlich wie bei einer Dieselbrennkraftmaschine. Die erfindungsgemäße Voreinspritzung reduziert die Neigung zur Rußbildung aufgrund von unvollständiger Kraftstoffverbrennung, steigert die Drehzahlgrenze, mit der eine Brennkraftmaschine betrieben werden kann und die Leistungsausbeute bei Einhaltung zulässiger Emissionsgrenzen. Weiterhin wird ein weicher, geräuscharmer Verbrennungsablauf erzielbar.

Mit Hilfe eines schnell arbeitenden Ventiles 34 können die zur Einspritzung kommenden Kraftstoffmengen exakt gesteuert werden, wobei sowohl eine Steuerung der Kraftstoffzumeßmenge während des Saughubes als auch eine Steuerung der wirksamen Förderdauer mit einem solchen Ventil gesteuert werden kann. Im letzten Fall bleibt das Ventil während des Saughubes der Pumpenkolben offen, so daß der Pumpenarbeitsraum voll mit Kraftstoff gefüllt werden kann. Beim anschließenden Förderhub des Pumpenkolbens bestimmt das Schließen des Ventils den Förderbeginn und das Wiederöffnen des Ventils das Förderende. Auf diese Weise kann auf einem ausgesuchten Stück der Nockenerhebungskurve die Förderung erfolgen und die Einspritzung sowohl nach Förderbeginn oder auch nach Förderende gesteuert werden. Dabei ist bei der beschriebenen Kraftstoffeinspritzvorrichtung ein einziges Ventil für die Steuerung von sowohl der Kraftstoffeinspritzung durch die ersten Pumpenkolben 12 als auch die zweiten Pumpenkolben 13 ausreichend.

**Patentansprüche**

1. Kraftstoffeinspritzvorrichtung für Brennkraftmaschinen mit wenigstens einem Pumpenkolben (12), der in einen ersten Pumpenzylinder (7) einen ersten Pumpenarbeitsraum (14) einschließt und mit wenigstens einem zweiten Pumpenkolben (13), der in einem zweiten Pumpenzylinder (9) einen zweiten Pumpenarbeitsraum (15) einschließt, von denen der erste Pumpenzylinder (7) in einer ersten Radialebene (6) und der zweite Pumpenzylinder (9) in einer zweiten Radialebene (8) liegen, mit einem rotierend angetriebenen und in einem Verteilerzylinder (2) gelagerten Verteiler (3), der eine erste Verteileröffnung (25) und eine zweite Verteileröffnung (26) aufweist, die mit vom Verteilerzylinder (2) abgehenden, zu den Einspritzstellen an der Brennkraftmaschine führenden Einspritzleitungen (27) im Laufe der Verteilerdrehung nacheinander wahrend des Förderhubs der Pumpenkolben in Überdeckung kommen und die andererseits über Druckleitungen (23, 24) mit dem ersten Pumpenarbeitsraum (14) und mit dem zweiten Pumpenarbeitsraum (15) verbunden sind, wobei die Pumpenarbeitsräume über eine eine Dosiereinrichtung (34) enthaltene Kraftstoffversorgungsleitung (22) verbindbar sind und mit einem im Bereich der ersten Radialebene (6) und der zweiten Radialebene (8) liegenden Nockenring (31) mit radial ausgerichteten Nocken (39) einer Nockenbahn (33) und mit einem Pumpenantrieb (10), durch den synchron zur Drehung des Verteilers Nockenring (31) und Pumpenkolben (12, 13) relativ zueinander in Drehrichtung bewegt werden zur Erzeugung einer hin- und hergehenden Bewegung der Pumpenkolben, wobei die Zuordnung der Nocken (39) des Nockenrings (31) und der Pumpenkolben (12, 13) zueinander einerseits und der Winkelabstand α der Verteileröffnungen (25, 26) voneinander andererseits so sind, daß die Betätigung des ersten Pumpenkolbens (12) um diesen Winkelabstand versetzt zur Betätigung des zweiten Pumpenkolbens (13) erfolgt, dadurch gekennzeichnet, daß der erste Pumpenarbeitsraum (14) und der zweite Pumpenarbeitsraum (15) über eine gemeinsame Druckleitung (18) und einem ersten von dieser abzweigenden Kanal (23) mit der ersten Verteileröffnung (25) und zugleich über einen zweiten von dem Druckkanal (18) abzweigenden Kanal (24) mit der zweiten Verteileröffnung (26) verbunden sind und über eine gemeinsame Saugleitung (19) mit der ein Dosierventil (34) aufweisenden Kraftstoffversorgungsleitung (22) verbindbar sind.

2. Kraftstoffeinspritzvorrichtung nach Anspruch 1, dadurch gekennzeichnet, daß der Winkelabstand (α) so gewahlt ist, daß bei einem Förderhub eines der Pumpenkolben der andere der Pumpenkolben sich in seiner durch die Nockenbahn des Nockenrings (31) begrenzten äußersten radialen Stellung befindet und eine der Verteileröffnung durch den Verteilerzylinder (2) verschlossen ist.

3. Kraftstoffeinspritzvorrichtung nach Anspruch 2, dadurch gekennzeichnet, daß von dem Verteilerzylinder (2) vier Einspritzleitungen (27) in gleichen Winkelabständen abführen und der Winkelabstand (α) der Verteileröffnungen (25, 26) 135° voneinander beträgt.

4. Kraftstoffeinspritzvorrichtung nach Anspruch 1 bis 3, dadurch gekennzeichnet, daß das Dosierventil (34) wenigstens mittelbar elektrisch gesteuert wird von einem elektrischen Steuergerät (35).

5. Kraftstoffeinspritzvorrichtung nach Anspruch 4, dadurch gekennzeichnet, daß das Steuergerät (35) beim Saughub jeder der Pumpenkolben (12, 13) die Kraftstoffversorgungsleitung (22) öffnet, bei Beginn des wirksamen Pumpenhubes schließt und zur Beendigung des wirksamen Pumpenhubes wieder öffnet.

**Claims**

1. Fuel injection device for internal combustion engines, comprising at least one pump piston (12) enclosing a first pump working chamber (14) in a first pump cylinder (7), and at least one second pump piston (13) enclosing a second pump working chamber (15) in a second pump cylinder (9), the first pump cylinder (7) lying in a first radial plane (6) and the second pump cylinder (9) lying in a second radial plane (8), and comprising a rotationally driven distributor (3) which is mounted in a distributor cylinder (2) and which has a first distributor opening (25) and a second distributor opening (26), which openings in the course of the rotation of the distributor come into coincidence one after the other during the delivery stroke of the pump pistons with injection ducts (27) starting from the distributor cylinder (2) and leading to the injection points in the internal combustion engine, and on the other hand are connected via delivery ducts (23, 24) to the first pump working chamber (14) and to the second pump working chamber (15), while the pump working chambers are adapted to be connected via a fuel supply line (22) containing a metering device (34) ; also comprising a cam ring (31) lying in the region of the first radial plane (6) and of the second radial plane (8) and having radially aligned cams (39) on a cam track (33), and also comprising a pump drive (10) by which, in synchronism with the rotation of the distributor the cam ring (31) and pump pistons (12, 13) are moved relative to each other in the direction of rotation in order to produce a reciprocating movement of the pump pistons, the coordination of the cams (39) on the cam ring (31) and of the pump pistons (12, 13) relative to one another, on the one hand, and the angular distance $\alpha$ between the distributor openings (25, 26), on the other hand, are such that the operation of the first pump piston (12) is offset to the extent of said angular distance relative to the operation of the second pump piston (13), characterized in that the first pump working chamber (14) and the second pump working chamber (15) are connected, via a common delivery duct (18) and a first channel (23) branching off from the latter, to the first distributor opening (25) and at the same time, via a second channel (24) branching off from the delivery duct (18), to the second distributor opening (26) and, via a common suction duct (19), can be connected to to the fuel supply line (22) provided with a metering valve (34).

2. Fuel injection device according to Claim 1, characterized in that the angular distance ($\alpha$) is so selected that during a delivery stroke of one of the pump pistons the other pump piston is in its outermost radial position limited by the cam track of the cam ring (31) and one of the distributor openings is closed by the distributor cylinder (2).

3. Fuel injection device according to Claim 2, characterized in that four injection ducts (27) branch off from the distributor cylinder (2) at equal angular distances apart, and that the angular distance ($\alpha$) between the distributor openings (25, 26) amounts to 135º.

4. Fuel injection device according to Claims 1 to 3, characterized in that the metering valve (34) is controlled at least indirectly electrically by an electrical control device (35).

5. Fuel injection device according to Claim 4, characterized in that the control device (35) opens the fuel supply line (22) during the suction stroke of each of the pump pistons (12, 13), closes it at the beginning of the operative pump stroke, and reopens it on completion of the operative pump stroke.

## Revendications

1. Dispositif d'injection de carburant pour moteur à combustion interne comportant au moins un piston de pompe (12) qui pénètre dans une première chambre de travail de pompe (14) d'un premier corps de pompe (7) et au moins un second piston de pompe (13) qui pénètre dans la chambre de travail (15) d'un second corps de pompe (9), dont les premiers corps de pompe (7) se situent dans un premier plan radial (6) et les seconds corps de pompe (9), dans un second plan radial (8), avec un distributeur (3) entraîné en rotation et supporté dans un cylindre de distributeur (2) qui comporte une première ouverture de distributeur (25) et une seconde ouverture de distributeur (26) qui partant du cylindre du distributeur (2) vers les conduites d'injection (27) conduisant aux positions d'injection sur le moteur à combustion interne au cours de la rotation du distributeur, viennent successivement se placer en face pendant la course d'alimentation des pistons de pompe et sont reliées d'un autre côté par des conduites sous pression (23, 24) respectivement à la première et à la seconde chambre de travail des pompes (14, 15) où les chambres de travail des pompes peuvent être reliées par une conduite d'alimentation en carburant (22) contenant un dispositif d'alimentation par dose (34) et avec une bague à cames (31) avec les cames (39) d'une piste à cames (33) dirigées radialement dans la zone du premier plan radial (6) et du second plan radial (8), et avec un entraînement de pompe (10) par lequel de façon synchrone à la rotation du distributeur, la bague à cames (31) et les pistons de pompe (12, 13) sont déplacés en rotation les uns par rapport aux autres pour obtenir un mouvement de va-et-vient des pistons de pompe, où la disposition des cames (39) de la bague à cames (31) et des pistons de pompe (12, 13) se trouvent à un intervalle angulaire l'une de l'autre des ouvertures du distributeur (25, 26), de sorte que l'actionnement du premier piston de pompe (12) se déplace de cet intervalle angulaire vers l'actionnement du second piston de pompe (13), caractérisé en ce que la première chambre de travail de pompe (14) et la seconde chambre de travail de pompe (15) sont reliées entre elles par une conduite sous pression commune (18) et un premier canal (23) partant de celle-ci avec la première ouverture du distributeur (25) et en même temps par un second canal (24) partant du canal sous pression (18) avec la seconde ouverture du distributeur (26) et peuvent être mises en communication par une conduite d'aspiration commune (19) à l'aide d'une conduite d'alimentation en carburant comportant une soupape de dosage par dose (34).

2. Dispositif d'injection de carburant selon la revendication 1, caractérisé en ce que l'intervalle angulaire est choisi de telle sorte que, lors d'une course d'alimentation d'un des pistons de pompe, l'autre piston de pompe se trouve dans sa position radiale la plus à l'extérieur limitée par la piste de cames de la bague à cames (31), et en ce qu'une

des ouvertures du cylindre du distributeur (2) est fermée.

3. Distributeur d'injection de carburant selon la revendication 2, caractérisé en ce que partent du cylindre du distributeur (2) quatre conduites d'injection (27) réparties angulairement de façon régulière, l'intervalle angulaire ($\alpha$) des ouvertures du distributeur (25, 26) l'une par rapport à l'autre atteignant 135°.

4. Dispositif d'injection selon les revendications 1 à 3, caractérisé en ce que la soupape de distribution par dose (34) est commandée au moins directement électriquement par un régulateur électrique (35).

5. Dispositif d'injection de carburant selon la revendication 4, caractérisé en ce que le régulateur (35) ouvre la conduite d'alimentation en carburant (22) lors de la course d'aspiration de chaque piston de pompe (12, 13) la ferme au début de la course effective de la pompe et l'ouvre à nouveau à la fin de cette même course.

FIG. 1

FIG. 2

FIG. 3

FIG. 4

270°KW